Europäisches Patentamt

European Patent Office

Office européen des brevets

(19)

(11) Numéro de publication : **0 403 359 B1**

(12) **FASCICULE DE BREVET EUROPEEN**

(45) Date de publication du fascicule du brevet :
15.04.92 Bulletin 92/16

(51) Int. Cl.⁵ : **B60Q 1/42**

(21) Numéro de dépôt : **90401605.2**

(22) Date de dépôt : **12.06.90**

(54) **Pièce de manoeuvre pour indicateur de changement de direction d'un véhicule automobile, et commutateur électrique associé à une telle pièce de manoeuvre.**

(30) Priorité : **15.06.89 FR 8907964**

(43) Date de publication de la demande :
**19.12.90 Bulletin 90/51**

(45) Mention de la délivrance du brevet :
**15.04.92 Bulletin 92/16**

(84) Etats contractants désignés :
**DE ES GB IT**

(56) Documents cités :
**DE-A- 3 306 185**
**GB-A- 1 151 859**
**US-A- 2 800 542**

(73) Titulaire : **VALEO COMMUTATION**
**12, rue Jean-Bart**
**F-78960 Voisins-Le-Bretonneux (FR)**

(72) Inventeur : **Zerbin, Mattéo**
**6, Place d'Aquitaine**
**F-91200 Athis Mons (FR)**

(74) Mandataire : **Gamonal, Didier**
**Société VALEO Service Propriété Industrielle**
**30, rue Blanqui**
**F-93406 Saint-Ouen Cédex (FR)**

EP 0 403 359 B1

## Description

La présente invention concerne une pièce de manoeuvre, pour indicateur de changement de direction d'un véhicule automobile, liée en rotation au volant du véhicule automobile et propre à coopérer avec un doigt saillant d'un commutateur électrique, extérieur à ladite pièce et manoeuvré par l'utilisateur. Elle a également pour objet un commutateur électrique associé à une telle pièce de manoeuvre.

Un tel commutateur électrique est décrit, par exemple, dans les documents FR-A-2 607 959 et FR-A-2 607 961.

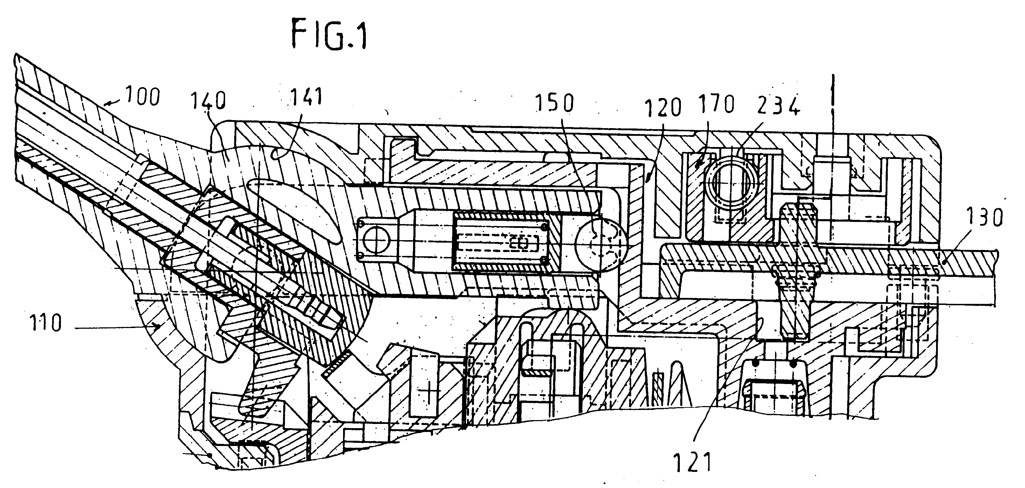

Les figures 1 à 4 montrent un autre exemple de réalisation.

Plus précisément ces commutateurs comportent un levier 100 à la disposition de l'utilisateur, et, à l'intérieur d'un boîtier 110, une pièce de commande 120 propre à manoeuvrer un doigt 130 saillant par rapport au boîtier 110. Le doigt 130 est donc un élément mobile commandé par le commutateur à partir du levier 100 de celui ci.

La pièce de commande 120 porte des plots de contact (non visibles) pour coopération avec des pistes électriques et alimentation des clignotants.

Le levier 100 est lié à une rotule 140 montée dans un logement complémentaire 141 du boîtier 110.

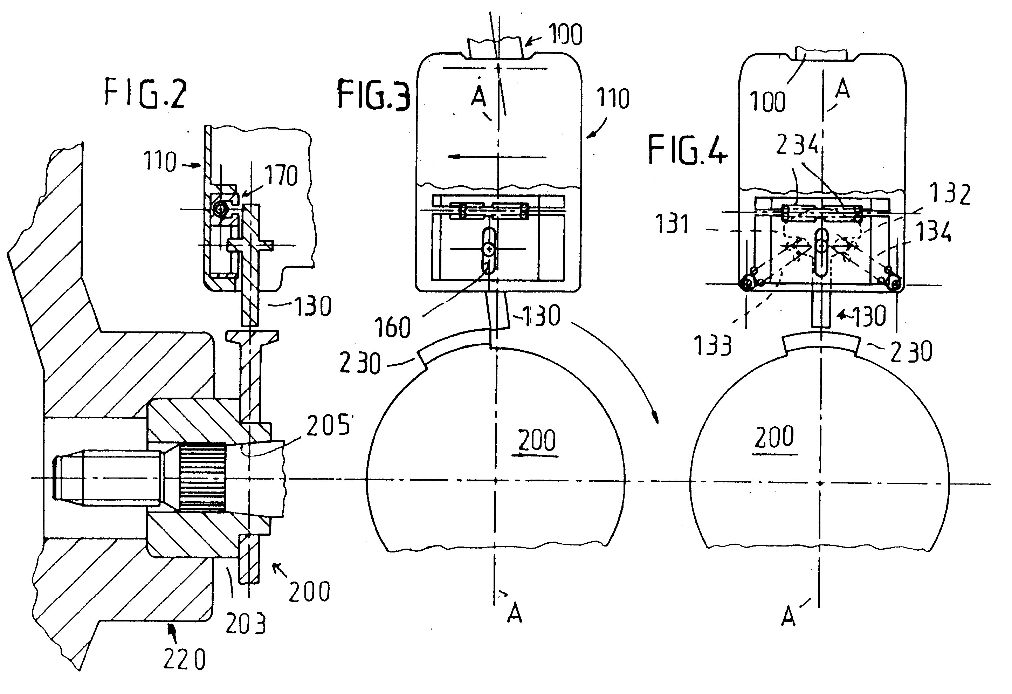

Le doigt 130 est muni, de manière symétrique, de structures latérales d'accrochage 131,132. Ces structures coopèrent avec des ressorts de traction 133,134 en prise avec le boîtier 110. Ces ressorts 133,134, ici inclinés, exercent sur le doigt 130 des forces dont la résultante est essentiellement parallèle à l'axe A des figures 3 et 4.

Ce doigt 130 est doté d'un tourillon inférieur engagé dans une ouverture 121 ménagé dans la pièce de commande 120. Cette ouverture est en forme de W.

Le doigt 130 possède également un tourillon supérieur engagé dans une ouverture oblongue 160 ménagé dans un chariot 170.

On notera que pour manoeuvre de la pièce 120 le levier 100 a une forme de U et présente deux galets 150, sollicités élastiquement pour coopération chacun avec des moyens de rampe portés par la pièce 120.

En position normale, la direction d'élongation de l'ouverture oblongue 160 s'étend parallèlement à l'axe A.

Lorsque le levier 100 est déplacé à pivotement, grâce à sa rotule 140 à gauche ou à droite dans le plan des figures 3 et 4, le galet concerné 150 coopère avec la pièce 120 et le tourillon inférieur du doigt 130 glisse dans l'ouverture 121 de la pièce 120, tandis que le tourillon supérieur coulisse dans l'ouverture oblongue 160 en éloignement du boîtier 110. L'autre galet 150 se dégage.

La colonne de direction 210 du véhicule automobile reliée au volant 220, par exemple, par une liaison 205 à cannelures et à emmanchement conique (figure 2), porte une pièce de manoeuvre 200 coopérant avec le doigt 130.

Plus précisément la pièce 200 est solidaire d'un insert 203, lui-même solidaire du volant 220. C'est entre cet insert 203 et la colonne de direction 210 qu'est prévue la liaison 205.

Pour assurer le retour automatique en position du commutateur électrique (réinitialisation), cette pièce de manoeuvre 200 est telle que lorsque le volant 220 est manoeuvré en sens inverse, le doigt 130 est entraîné à pivotement autour de l'axe des tourillons, la pièce 200 portant pour ce faire un segment 230.

Le chariot 170 est susceptible de déplacement par rapport au corps du boîtier 100, pour éviter de détériorer le doigt 130, ou un élément du commutateur, lorsque le conducteur maintient le levier pour alimenter en permanence les indicateurs de changement de direction, alors que l'entraînement du volant tendrait à forcer le retour en position de repos du doigt 130 et de la pièce 120, par l'intermédiaire du segment 230 coopérant avec ledit doigt.

Pour ce faire le chariot 170, guidé à la faveur de protubérances engagées dans des ouvertures correspondantes du boîtier 110, est soumis à l'action de moyens élastiques de rappel 234 prenant appui sur ledit chariot 170 et sur le boîtier 110. Il en résulte des bruits, du fait de la compression et de la détente desdits moyens élastiques 234, sous forme d'un ressort à boudin.

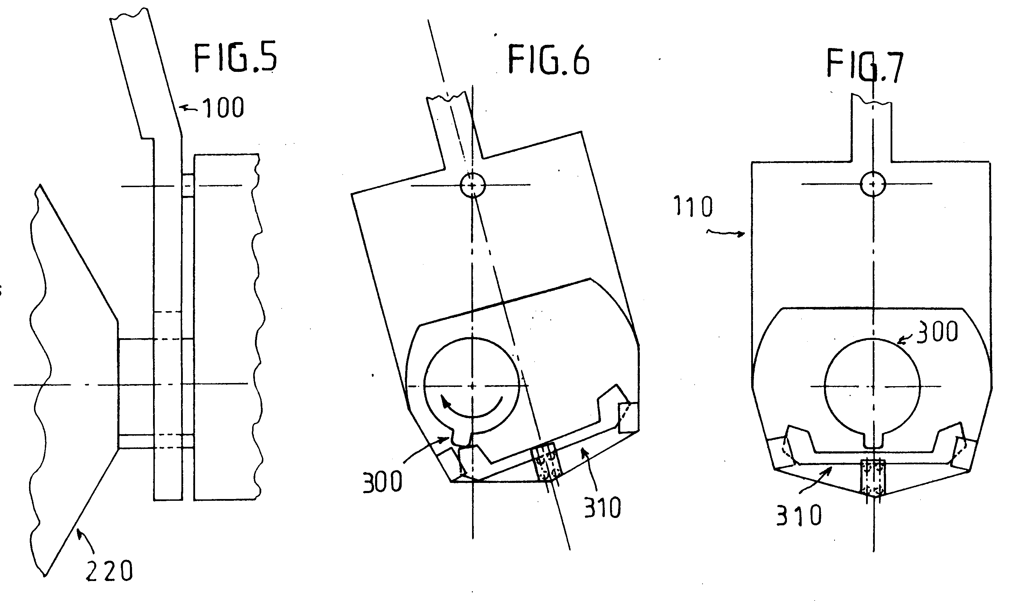

Pour pallier cet inconvénient , on peut songer figures 5 à 7 à monter la pièce de commande 300, non pas à l'extérieur du commutateur, mais à l'intérieur de celui-ci pour coopérer avec une came 310.

Une telle disposition est gênante, car le démontage du commutateur n'est pas aisé et nécessite un démontage du volant.

La présente invention a pour objet de pallier ces inconvénients et donc de créer une nouvelle disposition évitant de détériorer le commutateur électrique,tout en permettant un démontage aisé de celui-ci et en étant peu bruyante.

Suivant l'invention une pièce de manoeuvre du type sus-indiqué est caractérisée en ce qu'elle comprend un secteur de manoeuvre portant deux butées escamotables, entre une première position stable normale de travail et une deuxième position d'escamotage lorsque ledit doigt commandé est maintenu en position; disposées circonférentiellement en sens inverse, et en ce que chaque butée escamotable est soumise à l'action de moyens de maintien agencés entre la butée et la pièce de manoeuvre pour maintien de ladite butée escamotable dans sa première position stable de travail, en sorte que chaque butée est propre à passer en position d'escamotage par effacement des moyens de maintien sous l'action dudit doigt commandé du commutateur électrique à partir d'un certain effort.

Grâce à l'invention le commutateur électrique peut être disposé à l'extérieur de la pièce de manoeuvre et être facilement démontable. En outre, l'escamotage des butées est peu bruyant, la butée se déplaçant en contact avec le doigt, grâce notamment à une extrémité effilée ou en forme de coin, que présente ladite butée.

Dans une forme de réalisation les moyens de maintien sont des moyens élastiques de rappel.

Lesdites butées escamotables peuvent être d'un seul tenant avec la pièce de manoeuvre grâce à un rebord que présente ladite pièce de manoeuvre, et il en est de même des moyens élastiques de rappel. Ceux-ci peuvent être bien entendu distincts de ladite pièce de manoeuvre.

En variante les butées peuvent être montées à articulation sur la pièce de manoeuvre en étant distinctes de celle-ci, les moyens de maintien consistant en un plongeur coopérant élastiquement avec une rainure évasée, que comporte le fond de la pièce de manoeuvre.

Dans tous les cas, le commutateur électrique peut être simplifié par suppression du chariot ou analogue et de ses moyens élastiques associés.

Suivant une caractéristique, ce commutateur électrique associé à la pièce de manoeuvre selon l'invention, est caractérisé en ce que le tourillon supérieur dudit doigt commandé coopère avec un trou oblongue formé dans le boîtier.

La description qui va suivre illustre, à titre d'exemple, l'invention en référence aux dessins annexés dans lesquels :

– la figure 1 est une vue en coupe partielle d'un commutateur électrique de l'Art Antérieur ;

– la figure 2 est une vue en coupe montrant la pièce de manoeuvre avec son volant associé, ainsi que le doigt du commutateur électrique et partiellement le commutateur électrique ;

– la figure 3 est une vue schématique de face montrant la pièce de manoeuvre coopérant avec le doigt du commutateur ;

– la figure 4 est une vue analogue à la figure 3 pour la position de repos ;

– les figures 5 à 7 sont des vues analogues aux figures 2 à 4 pour un deuxième exemple de réalisation de l'art antérieur ;

– les figures 8 à 10 sont des vues analogues aux figures 2 à 4 pour un premier exemple de réalisation selon l'invention et sans la représentation du volant et de la colonne de direction ;

– la figure 11 est une vue partielle montrant la creusure de la pièce de manoeuvre et partiellement le plongeur associé ;

– les figures 12 à 14 sont des vues analogues aux figures 8 à 10 pour un second exemple de réalisation ;

– les figures 15 à 17 sont des vues analogues aux figures 8 à 10 pour un troisième exemple de réalisation selon l'invention ;

– les figures 18 et 19, 20 et 21, 22 et 23 sont des vues analogues aux figures 16 et 17 pour respectivement un quatrième, un cinquième, un sixième exemple de réalisation selon l'invention ;

– les figures 24 et 25 sont des vues analogues aux figures 12 et 14 pour encore une autre variante de réalisation ;

– la figure 26 est une vue partielle montrant la pièce de manoeuvre et l'une des butées avant leur assemblage pour le mode de réalisation des figures 24 et 25.

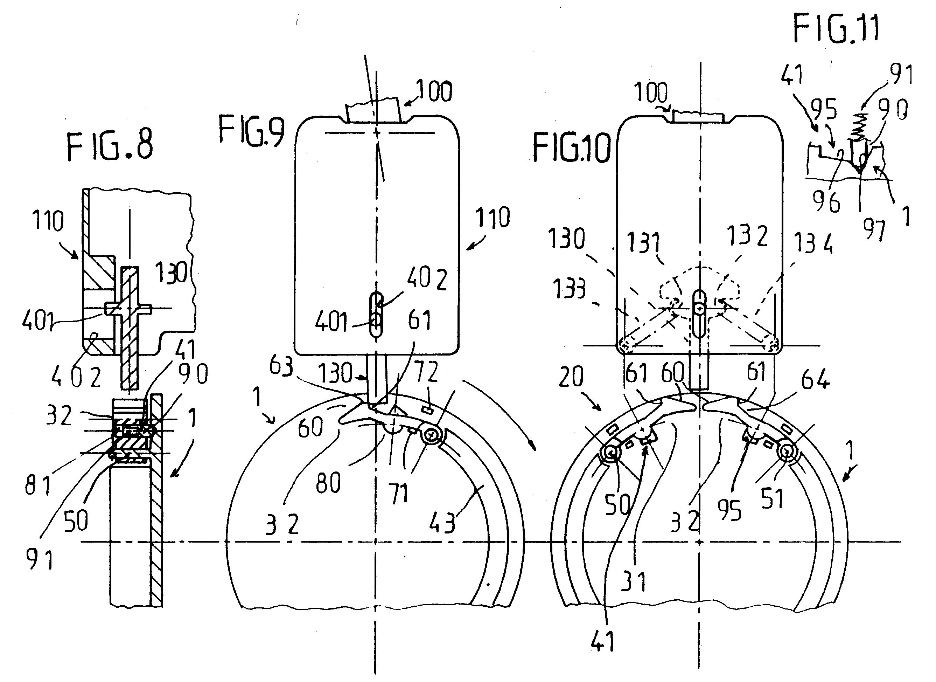

Dans les figures 8 à 23 les mêmes références seront reprises en ce qui concerne la partie du commutateur électrique décrit dans les figures 1 à 7 et les parties communes avec l'art antérieur.

Suivant l'invention la pièce de manoeuvre 1 à 7, pour indicateur de changement de direction d'un véhicule automobile, liée en rotation au volant 220 du véhicule automobile et propre à coopérer avec un doigt saillant 130 mobile commandé d'un commutateur électrique disposé à l'extérieur de ladite pièce 1 à 7, est caractérisée en ce qu'elle comprend un secteur de manoeuvre 20 à 26 portant deux butées 31 à 40 escamotables, entre une première position stable normale de travail et une seconde position d'escamotage lorsque le doigt commandé est maintenu en position, disposées circonférentiellement en sens inverse, et en ce que chaque butée escamotable 31 à 40 est soumise à l'action de moyens de maintien 41 agencés entre chaque butée 31 à 40 et la pièce de manoeuvre 1 à 7, pour maintien de ladite butée escamotable 31 à 40 dans sa première position stable de travail, en sorte que chaque butée escamotable est propre à passer en position d'escamotage par effacement des moyens de maintien 41 sous l'action dudit doigt 130 commandé du commutateur électrique à partir d'un certain effort.

Plus précisément dans les figures 8 à 11, la pièce de manoeuvre 1, liée en rotation au volant du véhicule automobile, comme à la figure 2, comprend un secteur de manoeuvre 20 portant deux butées escamotables 31,32.

Chaque butée est montée de manière pivotante par rapport à la pièce 1 grâce à des axes de rotation 50,51 portés par celle-ci. Elle consiste donc en un levier articulé, distinct de la pièce de manoeuvre 1, en étant portée par celle-ci.

Les butées sont identiques entre elles et comportent chacune une portion d'engagement 60, en forme de coin, et une portion d'arrêt 61 (ou portion d'accrochage).

La portion d'engagement 60 est disposée à l'extrémité de la butée 31,32 opposée à celle portant un alésage 70 pour coopération respectivement avec les axes 50,51 déformés à leur extrémité libre pour maintien desdits leviers 31,32.

La portion médiane de chaque butée est dotée d'un renflement 80 présentant un trou borgne 81 pour logement d'un plongeur 90 sollicité axialement en direction d'une creusure 95, que présente localement la pièce 1, sous l'action de moyens élastiques de rappel 91 prenant appui sur le fond du trou 81 et sur le plongeur 90.

Les moyens de maintien 41, selon l'invention, comportent donc ici le plongeur 90 et la creusure 95, lesdits moyens 41 étant agencés entre chaque butée 31,32 et la pièce de manoeuvre 1 en étant portée par celle-ci.

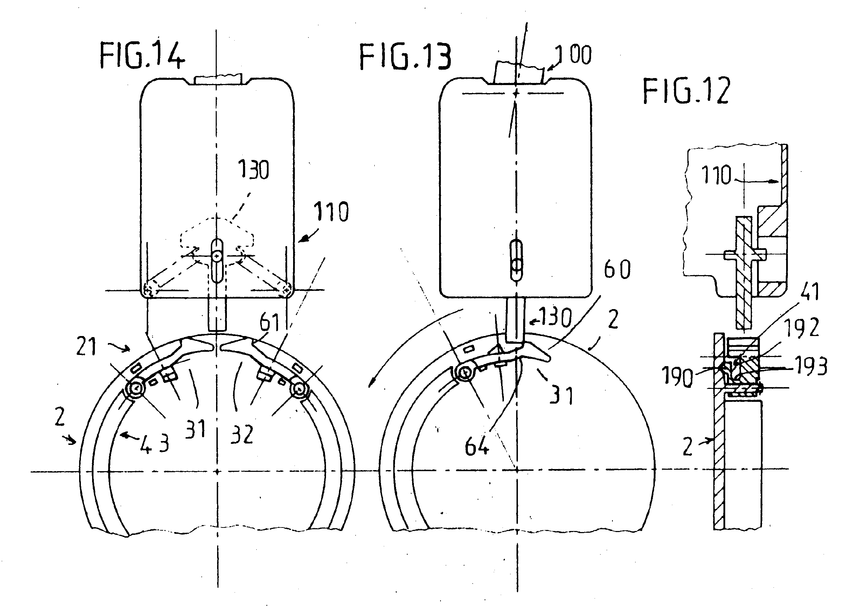

Pour ce faire le plongeur 90 présente une extrémité arrondie et une cavité de réception et de guidage du moyen élastique de rappel, ici sous forme de ressort à boudin 91 (représenté schématiquement sur la figure 11).

La creusure 95 a en section une portion 97 en forme de V se prolongeant en direction de l'axe de la pièce par une rampe 96 de faible inclinaison, en sorte que ladite creusure 95 a une forme évasée.

En position de repos (figure 10) les portions d'engagement 60 des butées 31,32 sont en vis-à-vis, le doigt 130 étant à l'écart de celles-ci.

En fonctionnement normal, le plongeur 90 est maintenu en contact de la portion 97, sous l'action du ressort 91, et lorsque le commutateur électrique est actionné, suivant le sens de direction, le doigt 130 est admis à coopérer avec la portion 60 de la butée 31,32 concernée, puis à dépasser celle-ci ainsi que la portion 61.

On notera qu'avantageusement une portion 63 globalement circonférentielle est prévue entre les deux portions 60,61, et qu'une portion inclinée de dégagement 64 prolonge la portion 61 en direction de l'autre extrémité de la butée 31,32 ; la portion d'extrémité 60 effilée étant décalée radialement par rapport à la partie courante de la butée 31,32. Au cours de cette phase la butée concernée 31,32 est maintenue en position de travail par le plongeur 90, en contact avec la portion 97.

Une liaison par coopération de forme est ainsi réalisée.

Lorsque le volant est tourné en sens inverse et que le conducteur n'a pas la main sur le levier 100, le doigt 130 s'escamote au contact de la portion 61 fixe, en sorte que le commutateur reprend sa position initiale. Une réinitialisation est ainsi créée.

Bien entendu la charge du ressort 91 est calculée en conséquence.

Lorsque l'utilisateur garde la main sur le levier 100, alors que le volant est ramené dans sa position de repos, la butée, par exemple, 32 s'escamote par coopération avec le doigt 130, maintenu en position par le levier 100.

En effet sa portion d'arrêt 61 coopérant avec le doigt 130 fixe, le plongeur 90 est amené à s'escamoter, la butée 31,32 concernée passant en position d'escamotage.

Les moyens de maintien 41 sont donc admis à s'effacer, le plongeur 90 quittant la portion 97 et se déplaçant vers l'axe de l'ensemble au contact de la rampe 96, pour effectuer un retrait.

On notera que grâce à la rampe 96 le mouvement de la butée 31,32 concernée est freinée, le ressort 91 se comprimant. De même, on appréciera que le doigt 130 est admis lors de l'escamotage de la butée concernée 31,32 à parcourir la portion 63 puis la portion 60.

Ainsi il n'y a jamais de relâchement brusque de la butée.

On notera la présence de deux saillies 71,72 disposées de part et d'autre des butées 31,32 pour limitation du pivotement de celles-ci.

Les figures 12 à 14 sont des vues analogues aux figures 8 à 10, mais ici, le plongeur 190 est d'un seul tenant avec la butée 31,32 concernée, en forme de levier, avantageusement en matière synthétique ou plastique, comme dans les figures 8 à 11. Le doigt 130 est également en matière synthétique ou plastique.

La pièce de manoeuvre 2 porte comme précédemment les axes 50,51.

On notera que ce plongeur 190, sous forme de protubérance arrondie, est formé à la faveur d'un retour axial 192 et d'un retour radial 193 de la butée 31,32 concernée.

Cette disposition permet de conférer au plongeur 190 une certaine élasticité.

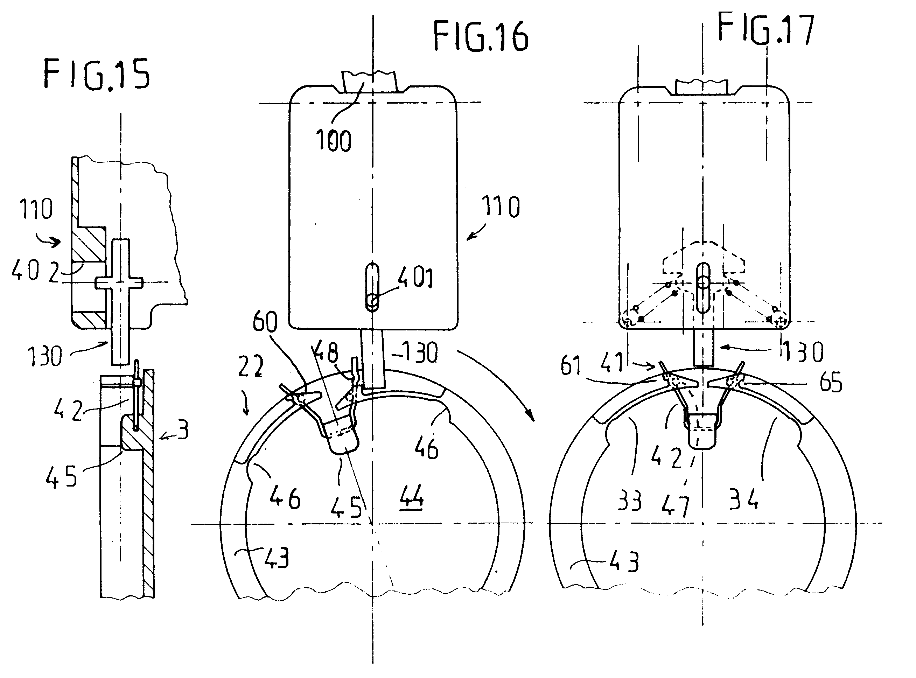

Dans les figures 15 à 17 les moyens de maintien 41 comportent des moyens élastiques de rappel 42, sous forme de ressort en épingle.

Les butées 33 et 34 consistent en des languettes élastiques issues de la pièce de manoeuvre 3, qui comporte à cet effet un rebord d'orientation axial 43.

Pour ce faire la pièce de manoeuvre 3 est avantageusement en matière plastique.

Ces languettes ont une partie courante, sous forme de bande de matière mince, se raccordant aux portions 61,63,60 ; un arrondi de dégagement 65 étant prévu entre la partie courante de la languette et la portion d'accrcochage 61.

Une fente, sépare ladite butée 33,34 du fond 44 de la pièce de manoeuvre 3. Cette pièce 3 présente une protubérance 45, dans laquelle vient s'engager le ressort de rappel 42 en forme de V, traversant ladite protubérance 45.

Ces butées 33,34 se raccordent à leur autre extrémité au rebord 43 par une zone d'enracinement mince 46, formée à la faveur d'un arrondi. Cette zone 46 forme une charnière d'articulation.

A leur extrémité libre, lesdites languettes 33,34 outre les portions 60,61 présentent chacune un pion 47 issu de la portion 60 et propre à coopérer avec le ressort 42. Celui-ci est doté localement d'une déformation 48 pour coopération de formes avec ledit pion 47. Ce ressort 42 s'étend entre le fond 44 de la pièce 3 et la languette, en étant disposé en-dessous du doigt 130. Les pions 47 sont donc saillant en direction du fond 44.

Comme visible à la figure 16 en configuration forcée ou d'escamotage, la butée 34 s'escamote, les moyens de maintien 41 s'effaçant, le pion 47 s'échappant de la déformation 48.

On notera que dans les figures 8 à 14, la pièce de manoeuvre 1,2 présente également un rebord 43, mais celui-ci est éloigné de la périphérie externe de ladite pièce de manoeuvre 1,2.

Dans les figures 15 à 17 et suivantes, le rebord 43 délimite la périphérie externe de la pièce de manoeuvre 3 à 6.

En pratique le secteur de manoeuvre 22 est formé à la faveur d'une interruption dudit rebord 43, formant une couronne annulaire.

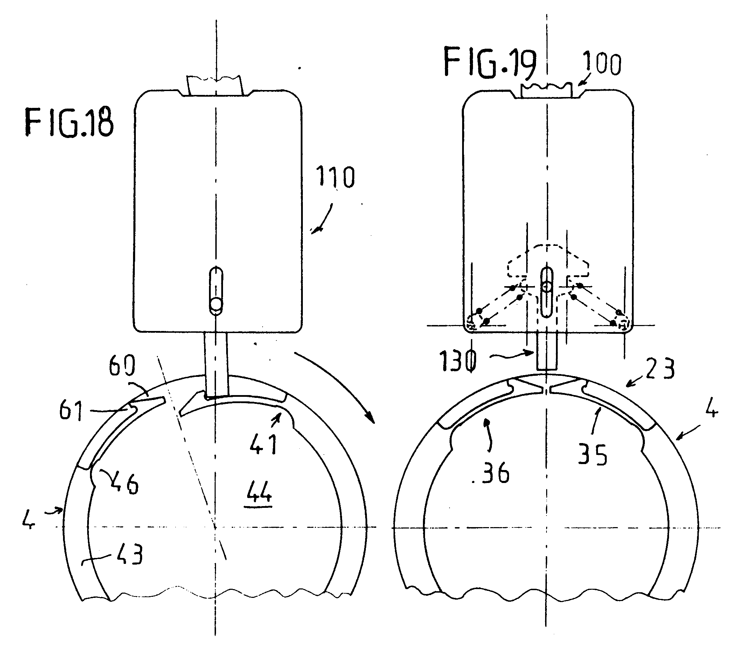

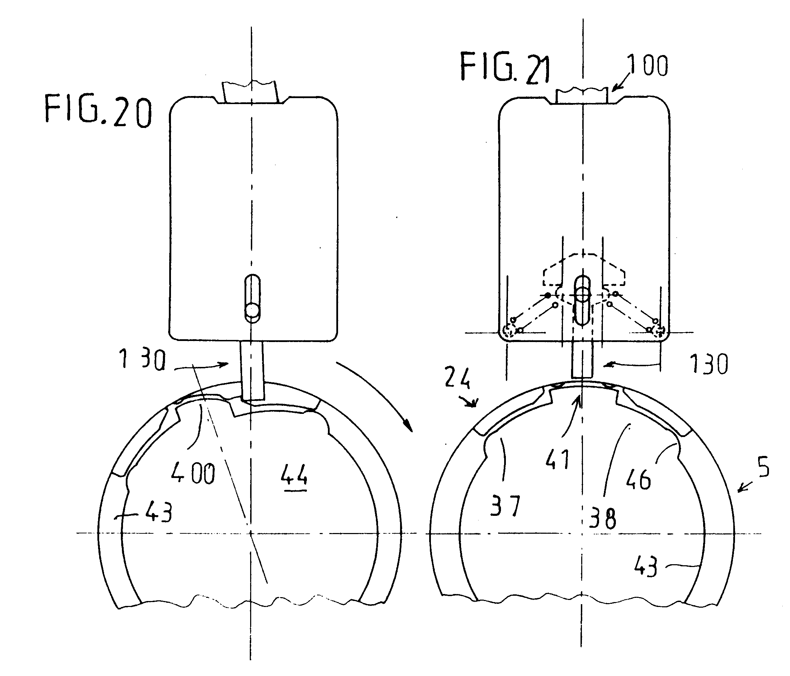

Dans les figures 18 et 19, les butées 35,36 sont d'un seul tenant avec la pièce de manoeuvre 4, aucun ressort de rappel n'étant prévu, les zones d'enracinement 46 et les languettes 35,36 étant suffisamment raides à cet effet. Les zones 46 appartiennent donc aux moyens de maitien 41.

Dans les figures 20 à 21, les deux butées 37 et 38 sont réunies par une peau 400 appartenant aux moyens de maintien 41 et permettant l'escamotage de celles-ci, comme visible à la figure 20.

Comme visible dans cette figure, la déformation engendre un déplacement circonférentiel de la peau 400, dont la résistance est choisie en conséquence.

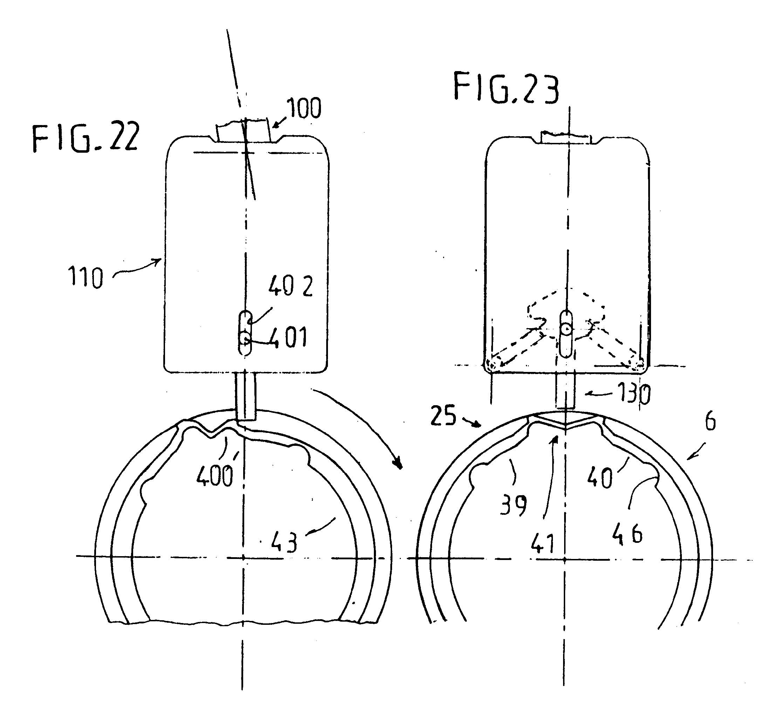

Dans les figures 22 à 23 la disposition est analogue mais la peau 400' de raccordement a une forme en V, la déformation créant un pliage en accordéon.

Ainsi qu'il ressort à l'évidence de la description et des dessins le commutateur peut être simplifié puisque le chariot 170 avec son ressort 234 est éliminé, le tourillon supérieur 401 du doigt 130 coopérant avec une ouverture oblongue 402 pratiquée dans le boîtier 110.

De même, on appréciera que dans tous les cas l'effacement des moyens de maintien est peu bruyant, lesdits moyens étant dimensionnés selon les applications, pour pouvoir s'effacer à partir d'un certain effort, lorsque le doigt coopère avec la butée concernée.

Bien entendu la présente invention n'est pas limitée aux exemples de réalisation décrits.

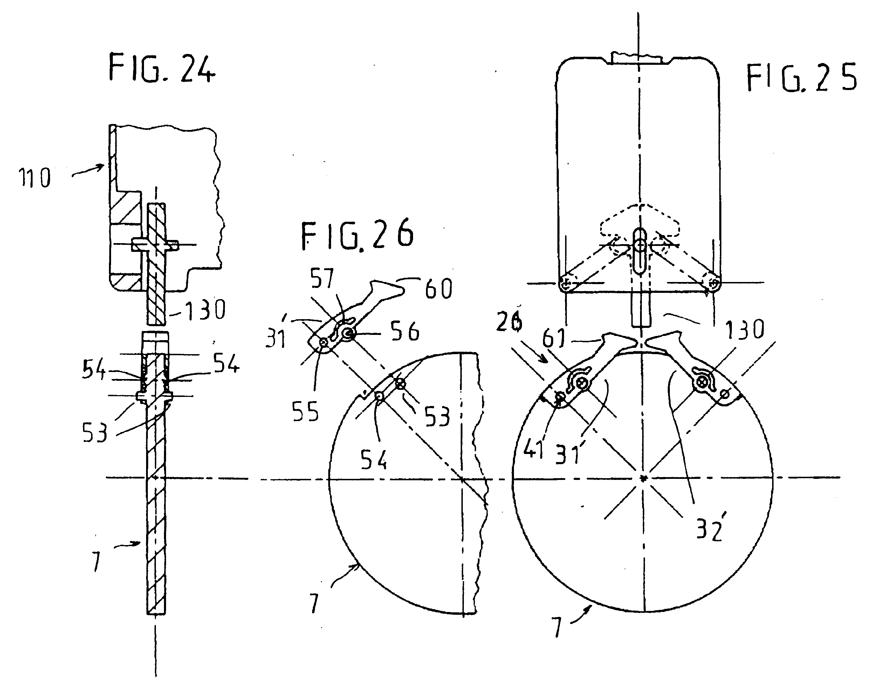

En particulier le secteur 26 (figures 24 à 26) peut être formé à la faveur d'un décrochement pratiqué à la périphérie externe de la pièce de manoeuvre 7, dans la tranche de celle-ci. Dans ce cas chaque butée 31',32' a en section une forme en U et vient coiffer la pièce 7.

Pour formation des moyens de maintien 41, la pièce 7 porte de part et d'autre de son plan des protubérances 54 pour coopération avec des trous 55 des flancs latéraux de la butée 31',32'. Ces trous 55 s'étendent au voisinage de l'extrémité de la butée 31',32' avantageusement en matière synthétique ou plastique comme la pièce de manoeuvre 7.

Une fente 57 est prévue dans chaque flanc de la butée 31',32' au voisinage d'une zone dotée d'une ouverture 56 pour montage de ladite butée 31',32' sur des pivots 53 disposés de part et d'autre du plan de la pièce 7.

Ainsi qu'on l'aura compris, chaque butée 31',32' est montée à articulation sur les pivots 53, en venant pincer la pièce 7 grâce notamment aux protubérances 54 de celle-ci.

Les fentes 57 permettent de rendre élastique la butée, qui s'escamotent en quittant les protubérances 54, bombées à cet effet, pour un certain effort.

Le commutateur électrique, au lieu de servir également pour le rappel code/phare et les avertisseurs sonores, comme à la figure 1, peut uniquement servir d'indicateur de direction.

Dans ce cas la présence d'une rotule n'est pas nécessaire, le levier pouvant être monté pivotant à l'aide de pivots.

La liaison de manoeuvre 1 à 6 au volant du véhicule automobile et à la colonne de direction peut s'effectuer d'une autre manière qu'à la figure 2.

**Revendications**

1. Pièce de manoeuvre pour indicateur de changement de direction d'un véhicule automobile, liée en rotation au volant (220) dudit véhicule automobile et propre à coopérer avec un doigt saillant (130) mobile commandé d'un commutateur électrique disposé à l'extérieur de ladite pièce de manoeuvre (1 à 7), caractérisée en ce qu'elle comprend un secteur de manoeuvre (20 à 26) portant deux butées escamotables (31 à 40), entre une première position stable normale de travail et une seconde position d'escamotage lorsque le dit doigt commandé (130) est maintenu en position, disposées circonférentiellement en sens inverse, et en ce que chaque butée escamotable (31 à 40) est soumise à l'action de moyens de maintien (41), agencés entre chaque butée (31 à 40) et la pièce de manoeuvre (1 à 7) pour maintien de ladite butée escamotable (31 à 40) dans sa première position stable de travail, en sorte que chaque butée escamotable est propre à passer en position d'escamotage par effacement des moyens de maintien (41) sous l'action du doigt (130) du commutateur électrique à partir d'un certain effort.

2. Pièce de manoeuvre selon la revendication 1, caractérisée en ce que chaque butée escamotable (31,32) consiste en un levier monté à articulation sur la pièce de manoeuvre (1,2).

3. Pièce de manoeuvre selon la revendication 2, caractérisée en ce que chaque levier (31,32) présente un trou borgne (81) pour logement d'un plongeur (90).

4. Pièce de manoeuvre selon la revendication 2, caractérisée en ce que chaque levier (31,32) est d'un seul tenant avec un plongeur (190).

5. Pièce de manoeuvre selon la revendication 3 ou 4, caractérisée en ce que pour formation de moyens de maintien (41), la pièce de manoeuvre (2,3) présente une creusure évasée (95) pour réception du plongeur (90,190).

6. Pièce de manoeuvre selon la revendication 5, caractérisée en ce que le creusure (95) présente en section une portion (97) en forme de V se prolongeant en direction de l'axe de la pièce de manoeuvre (1,2) par une rampe (96).

7. Pièce de manoeuvre selon la revendication 1, caractérisée en ce que la butée (33 à 40) consiste en des languettes issues de la pièce de manoeuvre (3 à 6), qui comporte à cet effet un rebord d'orientation axial (43).

8. Pièce de manoeuvre selon la revendication 7, caractérisée en ce qu'une fente sépare la languette (33 à 40) du fond (44) de la pièce de manoeuvre (3 à 6) et en ce que les languettes (33 à 34) se raccordent à l'une de leurs extrémités au rebord (43) par une zone d'enracinement mince (46).

9. Pièce de manoeuvre selon l'une quelconque des revendications 6 à 8, caractérisée en ce que pour formation des moyens de maintien (40,41), la pièce de manoeuvre (3) présente une protubérance (45) dans laquelle vient s'engager un ressort de rappel (42), en forme d'épingle, coopérant avec un pion (47) porté par chaque butée (33,34).

10. Pièce de manoeuvre selon l'une quelconque des revendications 6 à 8, caractérisée en ce que pour formation des moyens de maintien (41), les butées (37 à 40) sont reliées entre elles par une peau (400).

11. Commutateur électrique associé à une pièce de manoeuvre selon l'une quelconque des revendications 1 à 10, comportant un doigt (130) mobile commandé doté d'un tourillon inférieur, engagé dans une ouverture (121) ménagée dans une pièce de commande (120) que comporte ledit commutateur, caractérisé en ce que ledit doigt (130) présente un tourillon supérieur (401) coopérant avec une ouverture oblongue (402) pratiquée dans le boîtier.

**Patentansprüche**

1. Auslöseteil für einen elektrischen Schalter in Fahrtrichtungsblinkanlagen eines Kraftfahrzeugs, drehbeweglich verbunden mit dem Lenkrad (220) des genannten Kraftfahrzeugs und geeignet zum Zusammenwirken mit einem beweglichen Vorsprung (130), der durch einen außerhalb des genannten Auslöseteils angeordneten elektrischen Schalter betätigt wird (1 bis 7), **dadurch gekennzeichnet** , daß es einen Auslösesektor (20 bis 26) mit zwei Anschlägen (31 bis 40) aufweist, die zwischen einer ersten, stabilen und normalen Arbeitsposition und einer zweiten Einziehposition verstellbar sind, wenn der genannte gesteuerte Vorsprung (130) in seiner Position verbleibt, und die am Kreisumfang in umgekehrter Richtung angeordnet sind, und daß jeder einziehbare Anschlag (31 bis 40) der Einwirkung von Haltemitteln (41) ausgesetzt ist, die zwischen jedem Anschlag (31 bis 40) und dem Auslöseteil (1 bis 7) angebracht sind, um den genannten einziehbaren Anschlag (31 bis 40) in seiner ersten stabilen Arbeitsposition zu haldasten, so daß jeder einziehbare Anschlag geeignet ist, unter Einwirkung des Vorsprungs (130) des elektrischen Schalters von einer bestimmten Beanspruchung an durch Aufhebung der Haltemittel (41) in Einziehposition gebracht zu werden.

2. Auslöseteil nach Anspruch 1, **dadurch gekennzeichnet** , daß jeder einziehhbare Anschlag (31, 32) aus einem Hebel besteht, der gelenkig am Auslöseteil (1, 2) angebracht ist.

3. Auslöseteil nach Anspruch 2, **dadurch gekennzeichnet** , daß jeder Hebel (31, 32) ein Blindloch (81) für die Aufnahme eines Tauchkolbens (90) aufweist.

4. Auslöseteil nach Anspruch 2, **dadurch gekennzeichnet** , daß jeder Hebel (31, 32) aus einem Stück mit einem Tauchkolben (190) besteht.

5. Auslöseteil nach Anspruch 3 oder 4, **dadurch gekennzeichnet** , daß zur Bildung von Haltemitteln (41) das Auslöseteil (2, 3) eine konisch erweiterte Aushöhlung (95) für die Aufnahme des Tauchkolbens (90, 190) aufweist.

6. Auslöseteil nach Anspruch 5, **dadurch gekennzeichnet** , daß die Aushöhlung (95) im Querschnitt einen V-förmigen Abschnitt (97) aufweist, der sich in Richtung der Achse des Auslöseteils (1, 2) in Form einer Rampe (96) fortsetzt.

7. Auslöseteil nach Anspruch 1, **dadurch gekennzeichnet** , daß der Anschlag (33 bis 40) aus Laschen besteht, die vom Auslöseteil (3 bis 6) ausgehen, welches zu diesem Zweck eine axiale Ausrichtkante (4) besitzt.

8. Auslöseteil nach Anspruch 7, **dadurch gekennzeichnet** , daß ein Schlitz die Lasche (33 bis 40) vom Boden (44) des Auslöseteils (3 bis 6) trennt und daß die Laschen (33 bis 34) an einem ihrer Enden mit der Kante (43) durch eine dünne Verwurzelungszone (46) verbunden sind.

9. Auslöseteil nach einem der Ansprüche 6 bis 8, **dadurch gekennzeichnet** , daß das Auslöseteil (3) zur Bildung von Haltemitteln (40, 41) eine Ausstülpung (45) aufweist, in die eine nadelförmige Rückholfeder (42) eingreift, die mit einem an jedem Anschlag (33, 34) vorgesehenen Stift (47) zusammenwirkt.

10. Auslöseteil nach einem der Ansprüche 6 bis 8, **dadurch gekennzeichnet** , daß zur Bildung der Haltemittel (41) die Anschläge (37 bis 40) miteinander durch eine Haut (400) verbunden sind.

11. Elektrischer Schalter in Verbindung mit einem Auslöseteil nach einem der Ansprüche 1 bis 10, enthaltend einen gesteuerten, beweglichen Vorsprung (130), der mit einem unteren Drehzapfen versehen ist, welcher in eine Öffnung (121) eingreift, die sich in einem Betätigungsteil (120) befindet, das der genannte Schalter aufweist, **dadurch gekennzeichnet**, daß der genannte Vorsprung (130) einen oberen Drehzapfen (401) aufweist, der mit einer im Gehäuse angebrachten länglichen Öffnung (402) zusammenwirkt.

**Claims**

1. An actuating means for a motor vehicle direction indicator, coupled in rotation to the flywheel (220) of the said motor vehicle and adapted to cooperate with a projecting, movable control finger (130) of an electrical switch diaposed on the outside of the said actuating member (1 to 7), characterised in that it comprises an actuating sector (20 to 26) carrying two retractable stop elements (31 to 40), movable between a first, normal, stable working position and a second, retracted position when the said control finger (130) is held in position, the stop elements being arranged circumferentially and extending in opposite directions, and in that each retractable stop element (31 to 40) is subjected to the action of retaining means (41) disposed between each stop element (31 to 40) and the actuating member (1 to 7) so as to retain the said retractable stop element (31 to 40) in its stable first working position, in such a way that each retractable stop element is adapted to assume its retracted position by withdrawal of the retaining means (41) under the action of the finger (130) of the electrical switch when a force in excess of a determined amount is exerted.

2. An actuating means according to Claim 1, characterised in that each retractable stop element (31, 32) comprises a lever pivoted on the actuating member (1, 2).

3. An actuating means according to Claim 2, characterised in that each lever (31, 32) has a blind hole (81) for accommodating a plunger (90).

4. An actuating means according to Claim 2, characterised in that each lever (31, 32) is integral with a plunger (190).

5. An actuating means according to Claim 3 or Claim 4, characterised in that, to constitute retaining means (41), the actuating means (2, 3) has a flared recess (95) for receiving the plunger (90, 190).

6. An actuating means according to Claim 5, characterised in that the recess (95) has, in cross section, a V-shaped portion (97) extending towards the axis of the actuating means (1, 2) through a ramp (96).

7. An actuating means according to Claim 1, characterised in that the stop element (33 to 40) comprises tongues extending from the actuating means (3 to 6), which for this purpose has an axially orientated flange (43).

8. An actuating means according to Claim 7, characterised in that a slot separates the tongue (33 to 40) from the base (44) of the actuating means (3 to 6), and in that the tongues (33 to 34) are joined at one of their ends to the flange (43) through a thin root zone (46).

9. An actuating means according to any one of Claims 6 to 8, characterised in that, to define the retaining means (40, 41), the actuating means (3) has a projecting element (45) in which a return spring (42), of hairpin shape and cooperating with a pin (47) carried by each stop element (33, 34), is engageable.

10. An actuating means according to any one of Claims 6 to 8, characterised in that, to define the retaining means (41), the stop elements (37 to 40) are connected together through a web (400).

11. An electrical switch associated with an actuating means in accordance with any one of Claims 1 to 10, comprising a movable control finger (130) having a lower trunnion portion, engaged in an opening (121) formed in a control member (120) comprised in the said switch, characterised in that the said finger (130) has an upper trunnion element (401) cooperating with an oblong aperture (402) formed in the housing.

# FIG.1

EP 0 403 359 B1

FIG.2

FIG.3

FIG.4

FIG.7

300

310

110

FIG.6

310

300

FIG.5

100

220

10

EP 0 403 359 B1

FIG.8

FIG.9

FIG.10

FIG.11

11

FIG.14

FIG.13

FIG.12

FIG.15

FIG.16

FIG.17

EP 0 403 359 B1

110

402

130

42

3

45

100

110

401

60

48

130

22

46

46

45

44

43

61

41

130

65

42

33

47

34

43

FIG.18

FIG.19

FIG.20

FIG.21

FIG.22

FIG.23

FIG.24

FIG.26

FIG.25